# FASCICULE DE BREVET EUROPEEN

(11) **EP 0 817 762 B1**
(45) Date de publication et mention de la délivrance du brevet: **16.06.1999**
(21) Numéro de dépôt: 96910067.6
(22) Date de dépôt: 28.03.1996
(51) Int. Cl.: C04B 35/80, C04B 35/01

(54) **MATERIAU COMPOSITE PROTEGE CONTRE L'OXYDATION PAR UNE MATRICE AUTOCICATRISANTE ET SON PROCEDE DE FABRICATION**
DURCH SELBSTHEILENDE MATRIX OXIDATIONSGESCHÜTZTES VERBUNDMATERIAL UND VERFAHREN ZU SEINER HERSTELLUNG
COMPOSITE MATERIAL PROTECTED FROM OXIDATION BY A SELF-HEALING MATRIX, AND METHOD FOR MAKING SAME

(30) Priorité: 28.03.1995 FR 9503606
(43) Date de publication de la demande: 14.01.1998
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: GOUJARD, Stéphane, F-33700 Mérignac (FR); CHARVET, Jean-Luc, F-33160 Saint-Médard-en-Jalles (FR); LELUAN, Jean-Luc, F-33200 Bordeaux (FR); ABBE, François, F-33127 Martignas (FR); LAMAZOUADE, Ghislaine, F-33460 Arsac (FR)
(74) Mandataire: Joly, Jean-Jacques
(86) Numéro de dépôt international: FR9600467
(87) Numéro de publication internationale: WO9630317

(56) Documents cités:
- EP-A- 0 483 009
- US-A- 4 668 597
- US-A- 4 894 286
- US-A- 5 298 311

## Description

La présente invention concerne les matériaux composites et plus précisément la protection de ces matériaux contre l'oxydation.

Un domaine visé par l'invention est celui des matériaux composites thermostructuraux et plus particulièrement les matériaux composites à matrice céramique (CMC). Ceux-ci sont caractérisés par leurs propriétés mécaniques qui les rendent aptes à constituer des éléments de structures et par leur capacité à conserver ces propriétés mécaniques à température élevée. Les matériaux composites thermostructuraux sont utilisés notamment pour la fabrication de pièces subissant des contraintes thermomécaniques élevées dans des applications aéronautiques ou spatiales, par exemple pièces de moteurs ou éléments de carénage, ou dans des applications en friction, par exemple disques de freins de véhicules terrestres ou d'aéronefs.

Les matériaux composites thermostructuraux de type CMC sont constitués par un renfort fibreux densifié par une matrice, les fibres de renfort étant en une matière réfractaire telle que le carbone ou une céramique et la matrice étant en céramique. La densification du renfort fibreux consiste à en combler la porosité accessible par la matrice. Elle est réalisée par infiltration chimique en phase vapeur, ou par imprégnation au moyen d'un précurseur liquide de la matrice et transformation du précurseur généralement par traitement thermique. Un revêtement intermédiaire ou interphase notamment en carbone pyrolytique peut être déposé sur les fibres pour optimiser la liaison fibres-matrice comme décrit par exemple dans le document EP-A-0 172 082.

Il est nécessaire de protéger les matériaux thermostructuraux contre l'oxydation, en particulier lorsqu'ils contiennent du carbone, même lorsque le carbone est limité à une interphase entre fibres céramiques et matrice céramique. En effet, les contraintes thermomécaniques auxquelles ces matériaux sont soumis en cours d'utilisation provoquent une fissuration inévitable de la matrice. Les fissures procurent alors à l'oxygène du milieu ambiant un accès jusqu'au coeur du matériau.

Un procédé bien connu de protection de matériaux composites contre l'oxydation consiste à former un revêtement externe ou un revêtement interne, c'est-à-dire ancré dans la porosité résiduelle accessible, ayant des propriétés autocicatrisantes. Par propriété autocicatrisante, on entend ici la faculté de passer à la température d'utilisation du matériau dans un état visqueux suffisamment fluide pour combler les fissures de la matrice et bloquer ainsi l'accès à l'oxygène ambiant. Les revêtements autocicatrisants utilisés sont typiquement des verres ou composés vitreux ou des précurseurs de ceux-ci, c'est-à-dire des constituants capables de former un verre par oxydation à la température d'utilisation du matériau composite (formation de verre in situ).

Il a également été proposé dans le document FR-A-2668477 de former à la surface de la matrice ou au sein de celle-ci au moins une phase continue constituée par un système ternaire Si-B-C. Les proportions relatives de silicium, bore et carbone sont choisies pour permettre, par oxydation, la formation d'un verre ayant les caractéristiques de viscosité requises pour cicatriser des fissures aux températures d'utilisation envisagées, celles-ci pouvant atteindre 1 700°C.

Cette technique de protection procure de façon incontestable une augmentation importante de la durée de vie des matériaux thermostructuraux en milieu oxydant. Il a toutefois été constaté une efficacité de protection moins élevée aux températures intermédiaires, c'est-à-dire d'environ 450°C à 850°C, qu'aux plus hautes températures.

Un but de la présente invention est donc d'améliorer encore, dans le domaine des températures intermédiaires, l'efficacité de la protection anti-oxydation procurée par l'incorporation d'au moins une phase autocicatrisante dans la matrice d'un matériau composite.

Ce but est atteint du fait que la phase à propriété autocicatrisante (ci-après phase autocicatrisante) comprend, au moins au sein du matériau composite initialement formé, un mélange comportant un précurseur de verre susceptible de former un verre par oxydation à une température n'excédant pas 850°C, et du carbone libre, le pourcentage massique de carbone libre dans le mélange étant initialement compris entre 10 % et 35 %, de préférence supérieur à 15 %. On notera que les chiffres donnés dans tout le texte concernant le pourcentage massique du carbone libre se rapportent au matériau composite tel qu'élaboré avant toute disparition du carbone libre par oxydation.

En effet, il a été constaté, de façon surprenante, que la présence de carbone libre en excès dans la phase autocicatrisante apporte une très importante amélioration de l'efficacité de la protection anti-oxydation. Cette amélioration est en particulier remarquable aux températures intermédiaires, c'est-à-dire lorsque le carbone libre est associé à un précurseur susceptible de former un verre ayant des propriétés autocicatrisantes dans une plage de températures débutant aux environs de 450°C, ce qui est une valeur inhabituellement basse pour une céramique réfractaire.

Une explication de ce résultat paradoxal pourrait être la suivante.

Lorsque le matériau composite est utilisé en milieu oxydant avec une fissuration plus ou moins importante de la matrice, il est possible de distinguer deux phénomènes d'oxydation susceptibles de se produire. Le premier est néfaste ; il s'agit de l'oxydation du carbone contenu dans les fibres et/ou l'interphase du matériau composite, oxydation qui détruit progressivement le potentiel mécanique du matériau. Le second est bénéfique ; il s'agit de l'oxydation du précurseur du verre contenu dans la matrice qui provoque un colmatage des fissures par autocicatrisation et réduit fortement l'accès de l'oxygène du milieu ambiant au coeur du matériau, augmentant ainsi la durée de vie.

Il y a compétition entre ces deux phénomènes. Si l'oxydation du précurseur de verre est trop lente à s'établir, une dégradation du potentiel mécanique du matériau commence à se produire. Si l'oxydation du précurseur de verre est suffisamment rapide, elle prend le pas sur le phénomène d'oxydation néfaste. Or, la présence du carbone libre en excès dans la phase cicatrisante favorise l'oxydation du précurseur. L'exposition du matériau à un milieu oxydant se traduit par le départ du carbone libre dès que l'on atteint la température d'oxydation commençante du carbone. Il en résulte un accroissement de la surface spécifique d'oxydation du précurseur, ce qui augmente, à une température donnée, sa conversion en verre. De plus, l'oxydation du carbone libre se fait en piégeant une partie importante de l'oxygène qui aurait dû atteindre et oxyder les fibres et/ou l'interphase et en créant une pression partielle de CO ou CO₂ qui peut avoir pour effet de diminuer la pression partielle d'oxygène dans la fissure et laisser ainsi le temps au verre cicatrisant de se former et de jouer son rôle.

L'effet bénéfique de la présence de carbone libre en excès est plus notable lorsqu'il est associé à un précurseur susceptible de produire un verre autocicatrisant aux températures intermédiaires, puisque la conversion en verre est moins rapide lorsque la température est plus basse. Un tel précurseur est par exemple constitué par le carbure de bore B₄C. Le pourcentage massique de carbone libre dans la phase cicatrisante formée par B₄C et le carbone libre est alors de préférence supérieur à 15 %, voire même à 20 %.

L'effet bénéfique de la présence de carbone libre en excès existe aussi lorsqu'il est associé à un précurseur susceptible de produire un verre autocicatrisant à des températures plus élevées. Un tel précurseur est par exemple le système ternaire Si-B-C pour des températures supérieures à environ 650°C, décrit dans le document FR-A-2 668 477, lorsque le pourcentage massique de carbone libre est voisin de 20%, ou pour des températures supérieures à 850°C, lorsque le pourcentage massique de carbone libre est au plus égal à 10 %. Un tel précurseur peut être également le carbure de silicium SiC pour des températures supérieures à 1000°C lorsque le pourcentage massique de carbone libre est voisin de 20 %

D'une manière générale, pour une phase cicatrisante donnée, le pourcentage massique de carbone libre doit diminuer plus on recherche une efficacité maximale à haute température. En effet, d'une part, la conversion du précurseur en verre est plus rapide aux hautes températures et, d'autre part, une proportion trop importante de carbone libre pourrait se traduire par la formation d'une quantité importante de verre signifiant une consommation trop grande de la matrice.

L'efficacité de la protection anti-oxydation peut être optimisée dans une large plage de température en formant dans la matrice au moins une première phase autocicatrisante efficace aux températures intermédiaires, par exemple à base B₄C et au moins une deuxième phase autocicatrisante efficace aux températures élevées, par exemple à base Si-B-C, la première au moins de ces phases autocicatrisantes contenant du carbone libre en proportion adéquate. Pour assurer la protection des fibres et/ou de l'interphase en carbone dans le matériau composite, ces phases sont formées dans l'ordre dans lequel elles sont mentionnées en intercalant des phases de matrice céramique plus résistantes à l'oxydation que celles autocicatrisantes afin de conserver une armature solide à la matrice et de limiter la propagation de la fissure. Lorsque plusieurs phases autocicatrisantes contenant du carbone libre sont formées, le pourcentage massique de carbone libre dans les phases autocicatrisantes décroît à partir de celle la plus proche des fibres.

Dans la suite de la description, on se référera aux dessins annexés sur lesquels :
- la figure 1 montre les opérations réalisées successivement pour la réalisation de pièces en matériau composite type CMC;
- la figure 2 est une vue très schématique d'une installation permettant la fabrication de pièces en matériau composite protégé contre l'oxydation conformément à l'invention ;
- la figure 3 montre une courbe illustrant la relation entre, d'une part, la durée de vie mesurée lors d'essais de fatigue d'une pièce en matériau composite type CMC avec une matrice contenant des phases autocicatrisantes aux températures intermédiaires et, d'autre part, le pourcentage massique de carbone libre présent dans les phases autocicatrisantes en association du carbure de bore ; et
- la figure 4 illustre très schématiquement les différentes phases constitutives de la matrice d'un matériau composite protégé contre l'oxydation conformément à l'invention.

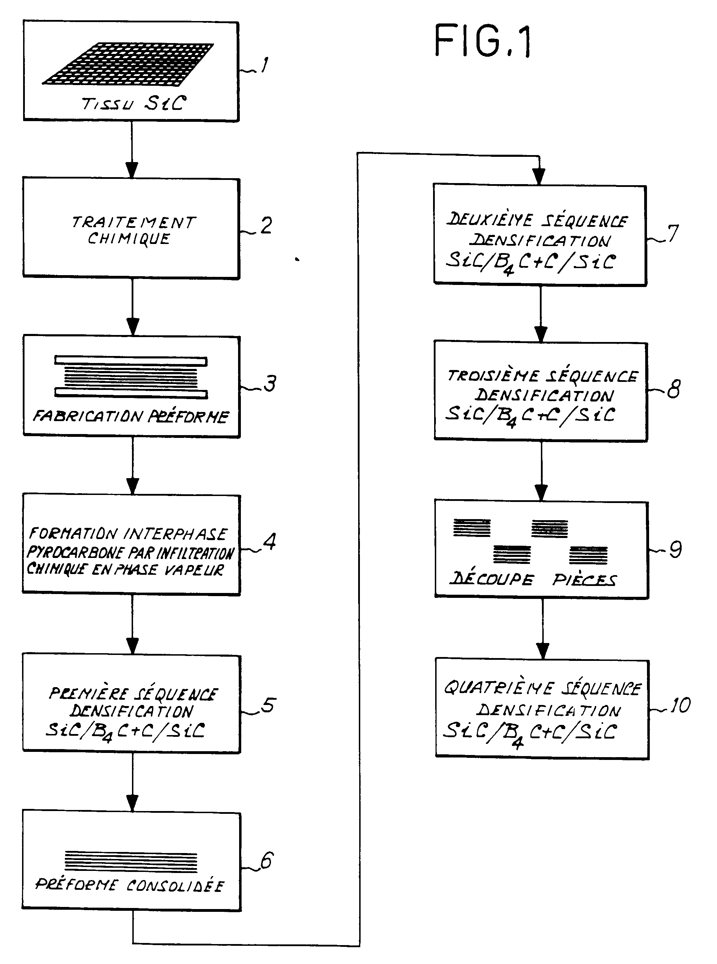

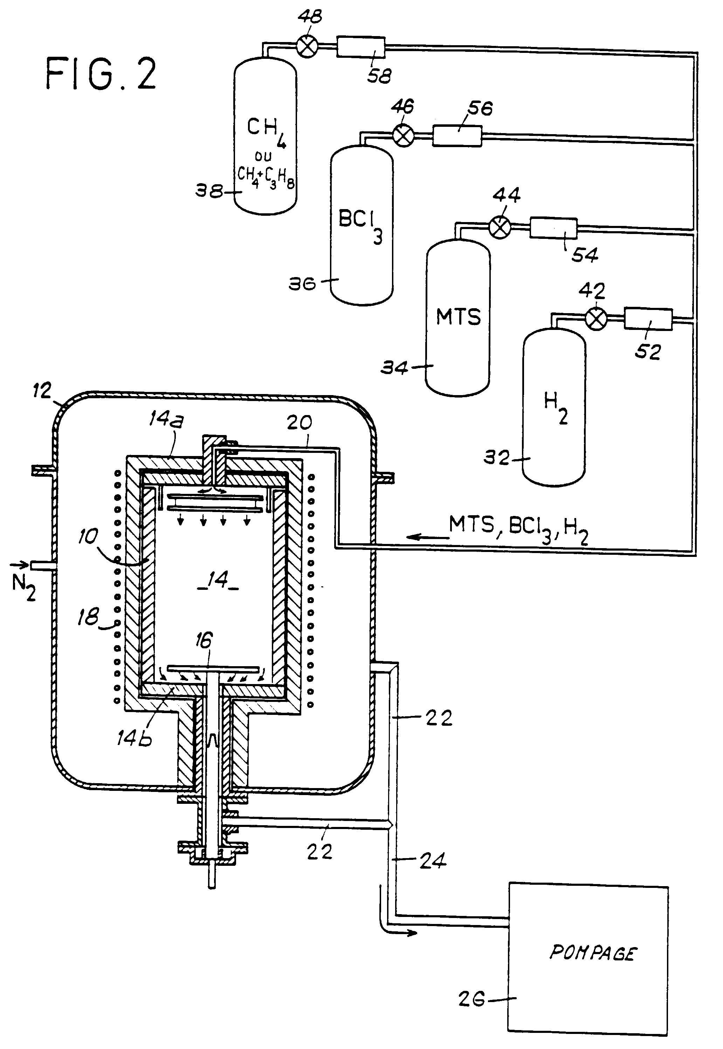

Un procédé d'élaboration de pièces en matériau composite thermo-structural de type CMC à renfort fibreux SiC et matrice SiC (matériau SiC/SiC), avec incorporation dans la matrice de phases autocicatrisantes constituées de carbure de bore (B₄C) et de carbone libre en excès, sera maintenant décrit en référence aux figures 1 et 2.

Une texture bidimensionnelle sous forme d'un tissu à armure toile est réalisée à partir de fibres essentiellement en carbure de silicium (fibres SiC) commercialisées par la société japonaise Nippon Carbon sous la dénomination "Nicalon NLM 202" (étape 1).

Le tissu est traité chimiquement, par exemple comme décrit dans le document FR-A-2 640 258 (étape 2).

Des strates rectangulaires sont découpées dans le tissu, empilées et serrées dans un outillage (ou conformateur) en graphite pour obtenir une préforme parallélépipédique de 3 mm d'épaisseur dans laquelle le taux volumique de fibres, c'est-à-dire le pourcentage du volume de la préforme effectivement occupé par les fibres, est de 40 % (étape 3).

La préforme ainsi maintenue dans l'outillage est placée dans un four d'infiltration chimique en phase vapeur pour former sur les fibres de la préforme un revêtement d'interphase en carbone pyrolytique. On pourra se référer par exemple au document EP-0 172 082 (étape 4).

La préforme ainsi munie d'un revêtement d'interphase, et toujours maintenue dans l'outillage, à l'intérieur du four d'infiltration, est soumise à une première séquence de densification comprenant successivement la formation d'une phase de matrice en carbure de silicium (SiC), la formation d'une phase autocicatrisante constituée de carbure de bore (B₄C) et de carbone libre en excès (C), et la formation d'une phase de matrice SiC ne contenant pas de carbone libre (étape 5).

La première séquence de densification confère à la préforme une consolidation suffisante, c'est-à-dire une liaison suffisante entre les fibres, pour permettre le démontage de l'outillage hors du four d'infiltration (étape 6).

La préforme consolidée a une tenue suffisante pour pouvoir être manipulée en conservant sa forme. Elle est réintroduite dans le four d'infiltration pour être soumise à une deuxième séquence de densification semblable à la première, c'est-à-dire SiC/B₄C+C/SiC (étape 7) puis à une troisième séquence semblable SiC/B₄C+C/SiC (étape 8).

La préforme densifiée est retirée du four et découpée en plusieurs pièces parallélépipédiques de dimensions 20 mm x 10 mm x 3 mm destinées à constituer des éprouvettes pour essais mécaniques (étape 9).

Les pièces découpées sont réintroduites dans le four d'infiltration pour être soumises à une quatrième et dernière séquence de densification SiC/B₄C + C/SiC semblable aux précédentes (étape 10).

On obtient ainsi des pièces en matériau composite dans lesquelles la matrice comprend alternativement des phases SiC et B₄C + C. Les phases SiC ont une épaisseur qui peut être croissante au fur et à mesure que l'on s'éloigne des fibres, par exemple comprise entre 0,5 µm près des fibres et plusieurs dizaines de µm (par exemple 20 à 50 µm) en surface du matériau. Les phases B₄C + C ont une épaisseur pouvant également être croissante au fur et à mesure que l'on s'éloigne des fibres, par exemple comprise entre 0,5 µm près des fibres et plusieurs dizaines de µm en surface du matériau (20 à 50 µm par exemple).

Une installation d'infiltration chimique en phase vapeur pouvant être utilisée pour la mise en oeuvre des séquences de densification décrites ci-dessus est représentée schématiquement par la figure 2.

Cette installation comprend un suscepteur en graphite 10 situé à l'intérieur d'une enceinte 12 et délimitant une chambre de réaction 14 dans laquelle les pièces en matériau composite à traiter sont disposées sur un plateau tournant 16. Le chauffage du suscepteur est assuré par un inducteur 18 disposé autour de celui-ci.

L'alimentation de la chambre de réaction 14 par la phase gazeuse donnant le dépôt voulu est réalisée par une canalisation 20 qui traverse la paroi de l'enceinte 12 et aboutit dans la chambre 14 à travers un couvercle 14a fermant celle-ci à sa partie supérieure.

L'extraction des gaz résiduels hors de la chambre de réaction est réalisée au moyen d'une ou plusieurs conduites 22 qui s'ouvrent dans le fond 14b de la chambre et se raccordent, à l'extérieur de l'enceinte, à une canalisation 24 reliée à un dispositif de pompage 26.

Le volume situé autour du suscepteur 10, à l'intérieur de l'enceinte 12, est balayé par un gaz neutre, tel que de l'azote N₂ formant tampon autour de la chambre de réaction.

Des sources de gaz 32, 34, 36, 38 fournissent les constituants de la phase gazeuse introduite dans la chambre de réaction. Chaque source est reliée à la canalisation 20 par une conduite comprenant une vanne d'arrêt à commande automatique, respectivement 42, 44, 46, 48 et un débitmètre massique, respectivement 52, 54, 56, 58, les débitmètres permettant de réguler les proportions relatives des constituants de la phase gazeuse.

Pour le dépôt de SiC, la phase gazeuse est constituée de méthyltrichlorosilane (MTS) auquel est ajouté un élément réducteur tel l'hydrogène H₂.

Pour le dépôt de B₄C + C, l'élément B est généré par un borane ou un halogénure, tel le trichlorure de bore (BCl₃), tandis que l'élément C est généré par un hydrocarbure, tel que le méthane (CH₄), ou un mélange d'hydrocarbures tels que le méthane et le propane, par exemple.

Les sources de gaz 32, 34, 36, 38 sont par conséquent respectivement des sources de H₂, de MTS, de BCl₃, et de CH₄ (ou de mélange CH₄ + C₃H₈).

La source 38 est utilisée aussi pour former l'interphase pyrocarbone sur les fibres SiC.

La composition du mélange B₄C + C, c'est-à-dire le pourcentage de carbone libre en excès, est commandée en sélectionnant, dans la phase gazeuse, la proportion des précurseurs BCl₃, CH₄ (ou mélange CH₄ + C₃H₈) et H₂.

L'infiltration chimique en phase vapeur des phases céramiques SiC de la matrice est réalisée à une température comprise entre environ 800°C et 1 150°C et sous une pression comprise entre environ 0,1.10³ N/m² et 50.10³ N/m², tandis que l'infiltration chimique en phase vapeur des phases autocicatrisantes B₄C + C est réalisée à une température comprise entre environ 800°C et 1150°C et sous une pression comprise entre environ 0,1.10³ N/m² et 50.10³ N/m².

Différentes éprouvettes A à D de matériau composite ont été réalisées comme décrit ci-avant mais avec pourcentages massiques de carbone libre dans les phases autocicatrisantes différents respectivement égaux à 0 %, 8 %, 12 %, 18 % et 26 % (le pourcentage étant le même pour toutes les phases autocicatrisantes d'un même matériau).

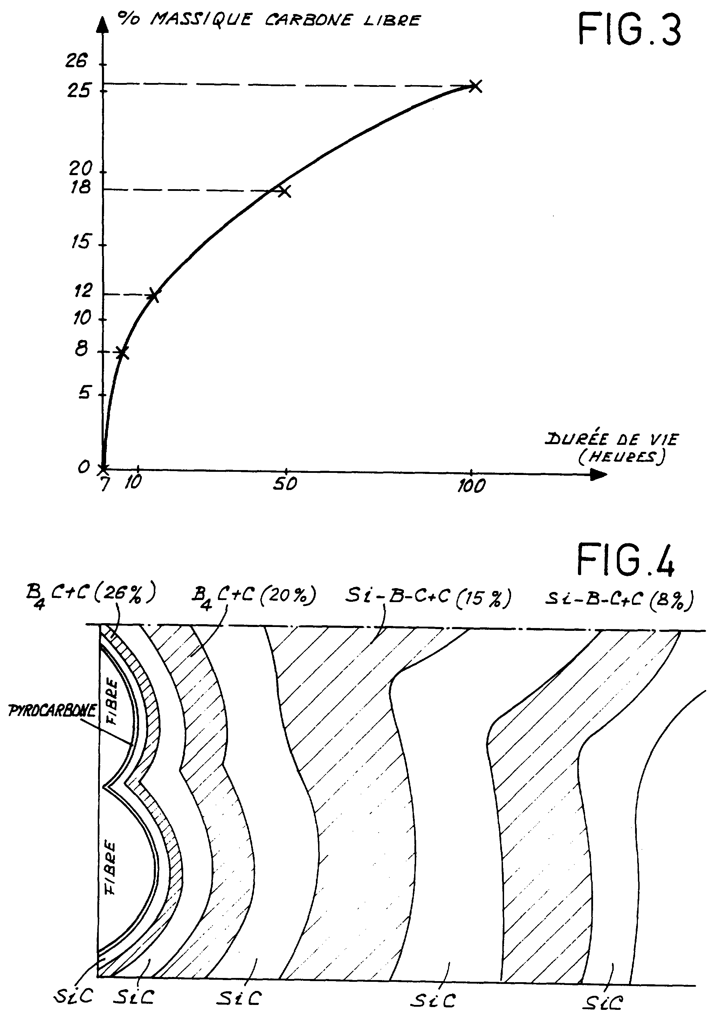

Les éprouvettes ont été soumises à des essais de fatigue en traction à 600°C sous air en faisant varier l'effort de traction exercé entre 0 et 120 MPa à une fréquence de 2 Hz. La durée de vie est mesurée par le temps s'écoulant entre le début de l'essai et la rupture de l'éprouvette. La figure 3 montre la relation entre le pourcentage massique de carbone libre et la durée de vie. Celle-ci est d'autant plus allongée que le pourcentage massique de carbone libre est plus élevé, dans le domaine exploré. Dans le cas où le pourcentage massique de carbone libre est de 26 %, l'essai a été interrompu au bout de 100 h, l'éprouvette D n'étant toujours pas rompue. Il va de soi que le pourcentage massique de carbone en excès ne peut dépasser une limite, environ 35 %, au-delà de laquelle la disparition du carbone ne pourra être compensée suffisamment par l'augmentation de volume résultant de l'oxydation du précurseur, pouvant entraîner un colmatage déficient.

La figure 3 montre la remarquable efficacité de l'adjonction de carbone libre en excès dans la phase autocicatrisante pour une température intermédiaire (600°C). Pour le matériau dont la phase autocicatrisante est constituée de carbure de bore contenant 26 % massique de carbone libre, la durée de vie dans les mêmes conditions d'essai est également supérieure à 100 h. à 500°C, alors qu'elle n'est que d'environ 50 h. pour un matériau dont la phase autocicatrisante est constituée de carbure de bore sans carbone libre en excès.

Afin de tester l'efficacité de l'adjonction de carbone libre en excès dans une phase autocicatrisante à température plus élevée, on a réalisé des éprouvettes en suivant le même processus que celui décrit en référence à la figure 1, mais en remplaçant les phases autocicatrisantes B₄C + C par des phases autocicatrisantes formées par un système ternaire Si-B-C avec un pourcentage massique de carbone libre égal à 8 % et un rapport B/Si d'environ 6,5.

Comme décrit dans le document FR-A-2 668 477 déjà cité, le système ternaire Si-B-C est obtenu par infiltration chimique en phase vapeur à partir d'une phase gazeuse comprenant un mélange des précurseurs MTS, BCl₃ et H₂. Le carbone libre en excès est obtenu en sélectionnant les proportions relatives de MTS, BCl₃ et H₂, éventuellement en ajoutant le précurseur CH₄ (ou CH₄+C₃H₈). Les proportions relatives de Si, B et C dans le système ternaire Si-B-C déterminent la température à laquelle le verre borosilicate formé par oxydation possède les propriétés autocicatrisantes requises. Pour les matériaux de type SiC-SiC envisagés plus haut, le choix de ces proportions permet de couvrir une large plage de températures élevées à partir d'environ 650°C jusqu'à environ 1200°C, température à partir de laquelle se manifeste l'instabilité de la fibre "Nicalon NLM 202". Une éprouvette E ainsi obtenue a été soumise à un test de fatigue dans les conditions décrites ci-avant pour les éprouvettes A à D, à l'exception de la température qui était portée à 1200°C. Au bout de 50h d'essai, l'éprouvette E n'est toujours pas rompue.

A titre de comparaison, une éprouvette identique à l'éprouvette D la plus performante aux températures intermédiaires, soumise au test de fatigue à 1 200°C, s'est rompue au bout de 8 h, et une éprouvette identique à l'éprouvette E, soumise au test de fatigue à 600°C, s'est rompue au bout de 7 h.

Aussi, afin d'apporter une protection anti-oxydation efficace dans une large gamme de températures, on combine avantageusement les performances apportées par les phases autocicatrisantes efficaces à température intermédiaire et celles efficaces à température élevée.

A cet effet, on réalise des éprouvettes F suivant le processus décrit en référence à la figure 1, mais à la différence que, dans les deux dernières séquences de densification, la phase autocicatrisante B₄C + C est remplacée par une phase autocicatrisante Si-B-C, ce qui donne une matrice séquencée telle que représentée sur la figure 4. En outre, le pourcentage massique de carbone libre dans les phases autocicatrisantes décroît d'une valeur de 26 % dans la première formée (la plus proche des fibres) à une valeur de 8 % dans la dernière formée en passant par des valeurs de 20 % et 15 % (B/Si environ égal à 4,6) dans les deuxième et troisième, comme montré sur la figure 4.

Des éprouvettes F sont soumises à des tests de fatigue tels que décrits ci-avant, respectivement à 600°C et à 1200°C. Aucune rupture n'est constatée après 100 h. à 600°C et après 50 h à 1 200°C.

Enfin, des éprouvettes G à matrice SiC + B₄C sans carbone libre en excès sont soumises également aux tests de fatigue à 600°C et 85 h. à 1 200°C. Une rupture est constatée après 7 h. à 600°C et 35 h. à 1200°C.

Les résultats des essais effectués sur les éprouvettes D, E, F et G sont regroupés dans le tableau ci-après.

| Matériau | % C libre dans phases autocicatrisantes | Essai de fatigue à 600°C | Essai de fatigue à 1 200°C |
|---|---|---|---|
| D matrice SiC/B₄C+C | 26 % | 100 h sans rupture | rupture à 8 h |
| E matrice SiC/Si-B-C+C | 8 % | rupture à 7 h | 50 h sans rupture |
| F matrice SiC/B₄+C/Si-B-C+C | de 26 % à 8 % en partant des fibres | 100 h sans rupture | 50 h sans rupture |
| Matrice SiC/B₄C | 0 % | Rupture à 7 h | Rupture à 35 h |

Bien entendu, l'invention peut être mise en oeuvre avec d'autres précurseurs de verre que ceux mentionnés dans les exemples de réalisation qui précèdent, et avec une céramique autre que SiC pour compléter la matrice. Des exemples de précurseurs de verre ou matrice céramique pour des matériaux composites de type CMC protégés contre l'oxydation abondent dans l'état de la technique.

En outre, le nombre de phases autocicatrisantes qui sont intercalées dans la matrice avec des phases céramiques peut être différent de 4. Il est au moins égal à 1 lorsqu'un seul type de phases autocicatrisantes est prévu, ou au moins égal au nombre de types différents de phases autocicatrisantes prévues. A cet égard, une Couverture plus précise d'une très large plage de températures peut être recherchée en formant des phases autocicatrisantes successives de différentes compositions en commençant par celles efficaces aux températures les plus basses et terminant par celles efficaces aux températures les plus élevées.

On notera enfin que lorsque plusieurs phases autocicatrisantes efficaces à des températures différentes sont formées avec des précurseurs de verre de compositions différentes, il n'est pas nécessaire qu'elles comprennent toutes du carbone libre en excès. Ainsi, par exemple, dans un matériau comportant une ou plusieurs phases autocicatrisantes efficaces aux températures intermédiaires comprenant du carbure de bore et du carbone libre en excès, on pourra incorporer une ou plusieurs phases autocicatrisantes efficaces aux températures plus élevées comprenant un système Si-B-C sans carbone libre en excès.

## Revendications

1. Matériau composite protégé contre l'oxydation comprenant un renfort fibreux densifié par une matrice qui comporte au moins une phase à propriété autocicatrisante comprenant un constituant précurseur de verre susceptible de former un verre par oxydation à une température n'excédant pas 850°C, caractérisé en ce que ladite phase autocicatrisante comprend, au moins au sein du matériau tel que formé initialement, un mélange dudit précurseur de verre et de carbone libre dans lequel le pourcentage massique de carbone libre est compris entre 10 % et 35 %.

2. Matériau composite selon la revendication 1, caractérisé en ce que, dans ladite phase autocicatrisante, le constituant précurseur de verre est susceptible de former par oxydation un verre ayant des propriétés cicatrisantes à partir d'environ 450°C.

3. Matériau composite selon la revendication 2, caractérisé en ce que le constituant précurseur de verre est du carbure de bore.

4. Matériau composite selon l'une quelconque des revendications 1 à 3, caractérisé en ce que ladite phase à propriété autocicatrisante comprend du carbone libre avec un pourcentage massique initialement au moins égal à 15 %.

5. Matériau composite selon l'une quelconque des revendications 1 à 4, caractérisé en ce qu'il comporte au moins une phase à propriété autocicatrisante dans laquelle le constituant précurseur de verre est susceptible de former un verre ayant des propriétés cicatrisantes à partir d'environ 650°C.

6. Matériau composite selon la revendication 5, caractérisé en ce que le constituant précurseur de verre est un système ternaire Si-B-C.

7. Matériau selon l'une quelconque des revendications 1 à 6, caractérisé en ce qu'il comprend plusieurs phases à propriété autocicatrisante intercalées avec des phases de matrice céramique plus résistantes à l'oxydation que les phases à propriété autocicatrisante, l'une au moins des phases à propriété autocicatrisante comprenant du carbone libre.

8. Matériau selon la revendication 7, caractérisé en ce que les phases à propriété autocicatrisante ont des compositions différentes.

9. Matériau selon l'une quelconque des revendications 7 et 8, caractérisé en ce que les phases de matrice céramique plus résistantes à l'oxydation sont en carbure de silicium.

10. Matériau selon l'une quelconque des revendications 1 à 9, caractérisé en ce qu'il comprend au moins une première phase à propriété autocicatrisante dans laquelle le constituant précurseur de verre est susceptible de former par oxydation un verre ayant des propriétés cicatrisantes à partir de 450°C environ, et au moins une deuxième phase à propriété autocicatrisante dans laquelle le constituant précurseur de verre est susceptible de former un verre ayant des propriétés cicatrisantes à partir de 650°C environ, la première phase à propriété autocicatrisante étant plus proche des fibres du renfort fibreux que la deuxième.

11. Matériau selon la revendication 10, caractérisé en ce qu'il comprend plusieurs phases à propriété autocicatrisante comprenant du carbone libre, dans lesquelles le pourcentage massique de carbone libre décroît à partir de celle la plus proche des fibres.

12. Procédé de fabrication d'un matériau composite protégé contre l'oxydation, comprenant la réalisation d'un renfort fibreux et la densification du renfort par une matrice comportant au moins une phase à propriété autocicatrisante qui comprend un constituant précurseur de verre susceptible de former un verre par oxydation à une température n'excédant pas 850°C, caractérisé en ce que ladite phase à propriété autocicatrisante est élaborée par formation d'un mélange du précurseur de verre et de carbone libre dans lequel le pourcentage massique de carbone libre est compris entre 10 % et 35 %.

13. Procédé selon la revendication 12, caractérisé en ce que ladite phase à propriété autocicatrisante est élaborée par infiltration chimique en phase gazeuse à partir d'une phase gazeuse contenant des précurseurs gazeux du précurseur de verre et du carbone dans des proportions telles que le pourcentage massique de carbone libre dans la phase à propriété autocicatrisante soit compris entre 10 % et 35 %.

14. Procédé selon la revendication 12, caractérisé en ce que ladite phase à propriété autocicatrisante est élaborée par infiltration chimique en phase gazeuse à partir d'une phase gazeuse contenant des précurseurs gazeux du précurseur de verre et du carbone dans des proportions telles que le pourcentage massique de carbone libre dans la phase à propriété autocicatrisante soit compris entre 15 % et 35 %.

15. Procédé selon l'une quelconque des revendications 12 à 14, caractérisé en ce que la densification du renfort comprend la formation de plusieurs phases à propriété autocicatrisante intercalées avec des phases de matrice plus résistantes à l'oxydation, l'une au moins des phases à propriété autocicatrisante étant élaborée par formation d'un mélange de précurseur de verre et de carbone libre.

16. Procédé selon la revendication 15, caractérisé en ce que l'on forme des phases à propriété autocicatrisante avec des précurseurs de verre différents donnant par oxydation des verres ayant des propriétés cicatrisantes dans différentes plages de températures.

17. Procédé selon l'une quelconque des revendications 12 à 16, caractérisé en ce que l'on forme au moins une phase à propriété autocicatrisante dans laquelle le constituant précurseur de verre est susceptible de former par oxydation un verre ayant des propriétés cicatrisantes à partir de 450°C environ.

18. Procédé selon l'une quelconque des revendications 12 à 17, caractérisé en ce que l'on forme au moins une phase autocicatrisante dans laquelle le constituant précurseur de verre est susceptible de former un verre ayant des propriétés cicatrisantes à partir de 650°C environ.

## Patentansprüche

1. Oxidationsgeschütztes Verbundmaterial aufweisend eine durch eine Matrix verdichtete faserige Verstärkung, wobei die Matrix mindestens eine Phase mit selbstheilender Eigenschaft enthält, welche einen Glasvorläufer-Bestandteil aufweist, der in der Lage ist, bei einer Temperatur, die 850°C nicht überschreitet, durch Oxidation ein Glas zu bilden, dadurch gekennzeichnet, daß die selbstheilende Phase, zumindest im Inneren des Materials von anfänglicher Beschaffenheit, ein Gemisch des Glasvorläufers und ungebundenen Kohlenstoffs, in dem der Masseprozentsatz des ungebundenen Kohlenstoffs zwischen 10% und 35% liegt, aufweist.

2. Verbundmaterial nach Anspruch 1, dadurch gekennzeichnet, daß in der selbstheilenden Phase der Glasvorläufer-Bestandteil in der Lage ist, durch Oxidation ein Glas zu bilden, das ab etwa 450°C selbstheilende Eigenschaften hat.

3. Verbundmaterial nach Anspruch 2, dadurch gekennzeichnet, daß der Glasvorläufer-Bestandteil Borcarbid ist.

4. Verbundmaterial nach einem der Ansprüche 1 bis 3, dadurch gekennzeichnet, daß die Phase mit selbstheilender Eigenschaft ungebundenen Kohlenstoff mit einem Masseprozentsatz, der anfänglich mindestens gleich 15% ist, aufweist.

5. Verbundmaterial nach einem der Ansprüche 1 bis 4, dadurch gekennzeichnet, daß es mindestens eine Phase mit selbstheilender Eigenschaft enthält, in der der Glasvorläufer-Bestandteil in der Lage ist, ein Glas zu bilden, das ab etwa 650°C selbstheilende Eigenschaften hat.

6. Verbundmaterial nach Anspruch 5, dadurch gekennzeichnet, daß der Glasvorläufer-Bestandteil ein ternäres Si-B-C-System ist.

7. Material nach einem der Ansprüche 1 bis 6, dadurch gekennzeichnet, daß es mehrere Phasen mit selbstheilender Eigenschaft aufweist, zwischen die Phasen aus Keramikmatrix eingelagert sind, die oxidationsbeständiger als die Phasen mit selbstheilender Eigenschaft sind, wobei mindestens eine der Phasen mit selbstheilender Eigenschaft ungebundenen Kohlenstoff aufweist.

8. Material nach Anspruch 7, dadurch gekennzeichnet, daß die Phasen mit selbstheilender Eigenschaft unterschiedliche Zusammensetzungen haben.

9. Material nach Anspruch 7 oder 8, dadurch gekennzeichnet, daß die oxidationsbeständigeren Phasen aus Keramikmatrix aus Siliciumcarbid sind.

10. Material nach einem der Ansprüche 1 bis 9, dadurch gekennzeichnet, daß es mindestens eine erste Phase mit selbstheilender Eigenschaft, in der der Glasvorläufer-Bestandteil in der Lage ist, durch Oxidation ein Glas zu bilden, das ab etwa 450°C selbstheilende Eigenschaften hat, und mindestens eine zweite Phase mit selbstheilender Eigenschaft, in der der Glasvorläufer-Bestandteil in der Lage ist, ein Glas zu bilden, das ab etwa 650°C selbstheilende Eigenschaften hat, aufweist, wobei die erste Phase mit selbtheilender Eigenschaft näher an den Fasern der faserigen Verstärkung ist als die zweite.

11. Material nach Anspruch 10, dadurch gekennzeichnet, daß es mehrere, ungebundenen Kohlenstoff enthaltende Phasen mit selbstheilender Eigenschaft aufweist, in denen der Masseprozentsatz des ungebundenen Kohlenstoffs ausgehend von denen, die den Fasern am nächsten sind, abnimmt.

12. Verfahren zur Herstellung eines oxidationsgeschützten Verbundmaterials, aufweisend die Anfertigung einer faserigen Verstärkung und die Verdichtung der Verstärkung durch eine Matrix, die mindestens eine Phase mit selbstheilender Eigenschaft enthält, welche einen Glasvorläufer-Bestandteil aufweist, der in der Lage ist, bei einer Temperatur, die 850°C nicht überschreitet, durch Oxidation ein Glas zu bilden, dadurch gekennzeichnet, daß die Phase mit selbstheilender Eigenschaft ausgebildet wird durch Herstellen eines Gemisches des Glasvorläufers und ungebundenen Kohlenstoffs, in dem der Masseprozentsatz des ungebundenen Kohlenstoffs zwischen 10% und 35% liegt.

13. Verfahren nach Anspruch 12, dadurch gekennzeichnet, daß die Phase mit selbstheilender Eigenschaft ausgebildet wird durch chemische Infiltration in der Gasphase, ausgehend von einer Gasphase, die gasförmige Vorläufer des Glasvorläufers und von Kohlenstoff in derartigen Anteilen enthält, daß der Masseprozentsatz des ungebundenen Kohlenstoffs in der Phase mit selbstheilender Eigenschaft zwischen 10% und 35% sei.

14. Verfahren nach Anspruch 12, dadurch gekennzeichnet, daß die Phase mit selbstheilender Eigenschaft ausgebildet wird durch chemische Infiltration in der Gasphase, ausgehend von einer Gasphase, die gasförmige Vorläufer des Glasvorläufers und von Kohlenstoff in derartigen Anteilen enthält, daß der Masseprozentsatz des ungebundenen Kohlenstoffs in der Phase mit selbstheilender Eigenschaft zwischen 15 und 35% sei.

15. Verfahren nach einem der Ansprüche 12 bis 14, dadurch gekennzeichnet, daß die Verdichtung der Verstärkung die Bildung mehrerer Phasen mit selbstheilender Eigenschaft, zwischen die oxidationsbeständigere Matrix-Phasen eingelagert sind, aufweist, wobei mindestens eine der Phasen mit selbstheilender Eigenschaft durch Bildung eines Gemisches aus Glasvorläufer und ungebundenem Kohlenstoff ausgebildet wird.

16. Verfahren nach Anspruch 15, dadurch gekennzeichnet, daß Phasen mit selbstheilender Eigenschaft mit unterschiedlichen Glasvorläufern gebildet werden, die durch Oxidation Gläser ergeben, die in verschiedenen Temperaturbereichen selbstheilende Eigenschaften haben.

17. Verfahren nach einem der Ansprüche 12 bis 16, dadurch gekennzeichnet, daß mindestens eine Phase mit selbstheilender Eigenschaft gebildet wird, in der der Glasvorläufer-Bestandteil in der Lage ist, durch Oxidation ein Glas zu bilden, das ab etwa 450°C selbstheilende Eigenschaften hat.

18. Verfahren nach einem der Ansprüche 12 bis 17, dadurch gekennzeichnet, daß mindestens eine selbstheilende Phase gebildet wird, in der der Glasvorläufer-Bestandteil in der Lage ist, ein Glas zu bilden, das ab etwa 650°C selbstheilende Eigenschaften hat.

## Claims

1. A composite material protected against oxidation, the material comprising fibre reinforcement densified by a matrix which includes at least one phase having self-healing properties, comprising a component that is a precursor for a glass that is suitable for forming a glass by oxidation at a temperature that does not exceed 850°C, the material being characterised in that said self-healing phase comprises, at least within the material as formed initially, a mixture of said glass precursor and of free carbon, in which the mass percentage of the free carbon lies in the range 10% to 35%.

2. A composite material according to claim 1, characterised in that in said self-healing phase, the glass-precursor component is suitable for forming by oxidation a glass having self-healing properties from about 450°C.

3. A composite material according to claim 2, characterised in that the glass-precursor component is boron carbide.

4. A composite material according to any one of claims 1 to 3, characterised in that said phase having self-healing properties includes free carbon at a mass percentage that is initially not less than 15%.

5. A composite material according to any one of claims 1 to 4, characterised in that it comprises at least one phase having self-healing properties in which the glass-precursor component is suitable for forming a glass having self-healing properties from about 650°C.

6. A composite material according to claim 5, characterised in that the glass-precursor component is a ternary Si-B-C system.

7. A material according to any one of claims 1 to 6, characterised in that it includes a plurality of phases having self-healing properties interposed with ceramic matrix phases that are better at withstanding oxidation than are the phases having self-healing properties, at least one of the phases having self-healing properties including free carbon.

8. A material according to claim 7, characterised in that the phases having self-healing properties are of different compositions.

9. A material according to claim 7 or 8, characterised in that the ceramic matrix phases that withstand oxidation best are of silicon carbide.

10. A material according to any one of claims 1 to 9, characterised in that it comprises at least one first phase having self-healing properties in which the glass-precursor component is suitable, on oxidation, for forming a glass having self-healing properties from about 450°C, and at least one second phase having self-healing properties in which the glass-precursor component is suitable for forming a glass having self-healing properties from about 650°C, the first phase having self-healing properties being closer to the reinforcing fibres than the second.

11. A material according to claim 10, characterised in that it includes a plurality of phases having self-healing properties, and including free carbon, in which the mass percentage of free carbon decreases going away from the phase closest to the fibres.

12. A method of manufacturing a composite material including protection against oxidation, the method comprising making fibre reinforcement and densifying the reinforcement by means of a matrix comprising at least one phase having self-healing properties and including a glass-precursor component suitable for forming a glass by oxidation at a temperature not exceeding 850°C, the method being characterised in that said phase having self-healing properties is made by forming a mixture of glass-precursor and of free carbon in which the mass percentage of free carbon lies in the range 10% to 35%.

13. A method according to claim 12, characterised in that said phase having self-healing properties is made by chemical gas infiltration starting from a gas containing gaseous precursors for the glass-precursor and for carbon, the gases being in proportions such that the mass percentage of free carbon in the phase having self-healing properties lies in the range 10% to 35%.

14. A method according to claim 12, characterised in that said phase having self-healing properties is made by chemical gas infiltration starting from a gas containing gaseous precursors for the glass-precursor and for carbon, the gases being in proportions such that the mass percentage of free carbon in the phase having self-healing properties lies in the range 15% to 35%.

15. A method according to any one of claims 12 to 14, characterised in that densification of the reinforcement comprises forming a plurality of phases having self-healing properties interposed between matrix phases that are better at withstanding oxidation, at least one of the phases having self-healing properties being made by forming a mixture of glass-precursor and of free carbon.

16. A method according to claim 15, characterised in that the phases having self-healing properties are formed by using different glass-precursors that oxidise to give glasses having self-healing properties in different temperature ranges.

17. A method according to any one of claims 12 to 16, characterised in that at least one phase having self-healing properties is formed in which the glass-precursor component is suitable for oxidising to form a glass having self-healing properties from about 450°C.

18. A method according to any one of claims 12 to 17, characterised in that at least one self-healing phase is formed in which the glass-precursor component is suitable for forming a glass having self-healing properties from about 650°C.
